# EUROPEAN PATENT APPLICATION

(11) **EP 4 815 325 A1**
(43) Date of publication of application: **30.09.2026**
(21) Application number: 25782888.9
(22) Date of filing: 31.03.2025
(51) Int. Cl.: H04B 7/06, H04B 17/318, H04B 17/336, H04W 24/08

(54) **METHOD AND APPARATUS FOR USER EQUIPMENT-INITIATED BEAM REPORTING OPERATION**

(30) Priority: 03.04.2024 KR 20240045579
(71) Applicant: Hyundai Motor Company, Seoul 06797 (KR); Kia Corporation, Seoul 06797 (KR)
(72) Inventor: HONG, Ui Hyun, Hwaseong-si, Gyeonggi-do 18280 (KR); LEE, Jeong Su, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2025/004137
(87) International publication number: WO 2025/211665

(57) **Abstract**

A method of user equipment for an event-driven beam reporting operation comprises the steps of: determining a type of an event to be detected; determining a triggering condition of the event on the basis of the determined type; and if the event is detected on the basis of the determined triggering condition, transmitting, to a base station, a beam report according to the event, wherein the triggering condition of the event may include at least one threshold value and at least one hysteresis value.

## Description

### [Technical Field]

The present disclosure relates to a beam management method for a mobile communication system, and more particularly, to a user equipment (UE)-initiated/event-driven beam management method and an apparatus therefor.

### [Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, in the 3rd generation partnership project (3GPP) Release-19, standardization for user equipment-initiated and event-driven beam management to resolve problems associated with conventional network-driven beam management is in progress. The user equipment-initiated or event-driven beam management is a scheme in which a terminal, which can recognize the state of the current beam and variations in the beam faster than a base station, performs beam management in a proactive manner, unlike conventional network-driven beam management. However, a specific beam reporting operation for terminal-initiated/event-driven beam management has not yet been defined.

### [Disclosure]

### [Technical Problem]

The present disclosure is directed to providing a method for UE-initiated/event-driven beam management, and an apparatus therefor.

### [Technical Solution]

A method of a terminal, according to exemplary embodiments of the present disclosure for achieving the above-described objective, may comprise: determining a type of an event to be detected; determining a triggering condition of the event based on the determined type; and based on the event being detected according to the determined triggering condition, transmitting, to a base station, a beam report according to the event, wherein the triggering condition of the event includes at least one threshold value and at least one hysteresis value.

The event to be detected may be an event triggered when a quality of a current beam becomes lower than a threshold value, and the triggering condition of the event may be determined according to an equation below: $Quality of the current beam + hysteresis < threshold .$

The event to be detected may be an event triggered when a quality of at least one new beam becomes higher than a quality of a current beam by at least a threshold value, and the triggering condition of the event may be determined according to an equation below: $Quality of at least one new beam - hysteresis > Quality of the current beam + threshold .$

The event to be detected may be an event triggered when a quality of at least one new beam is equal to or greater than a threshold value, and the triggering condition of the event may be determined according to an equation below:

$Quality of at least one new beam - hysteresis > threshold .$

The event to be detected may be an event triggered when a quality of a current beam is equal to or less than a first threshold value and a quality of at least one new beam is equal to or greater than a second threshold value, and the triggering condition of the event may be determined according to equations below:

$Quality of the current beam + hysteresis < threshold_ 1$

Quality of at least one new beam - hysteresis > threshold_2

The event to be detected may be an event triggered when a quality of a current beam is equal to or less than a first threshold value and a quality of at least one new beam is equal to or greater than a second threshold value, and the triggering condition of the event may be determined according to equations below:

$Quality of the current beam + hysteresis_ 1 < threshold_ 1$

Quality of at least one new beam - hysteresis_2 > threshold_2.

The at least one hysteresis value may be determined based on a speed of the terminal, whether the terminal is rotating, whether the terminal experiences blockage, and/or a location of the terminal.

The method may further comprise: receiving, from the base station, configuration information regarding triggering conditions for respective event types, wherein the triggering condition of the event may be determined based on the configuration information.

A method of a base station, according to exemplary embodiments of the present disclosure for achieving the above-described objective, may comprise: transmitting, to the terminal, configuration information regarding triggering conditions for respective event types; and receiving, from the terminal, a beam report according to an event detected based on a triggering condition of the event to be detected, the triggering condition being determined based on the configuration information, wherein the triggering condition of the event includes at least one threshold value and at least one hysteresis value.

The event to be detected may be an event triggered when a quality of a current beam becomes lower than a threshold value, and the triggering condition of the event may be determined according to an equation below:

$Quality of the current beam + hysteresis < threshold .$

The event to be detected may be an event triggered when a quality of at least one new beam becomes higher than a quality of a current beam by at least a threshold value, and the triggering condition of the event may be determined according to an equation below:

$Quality of at least one new beam - hysteresis > Quality of the current beam + threshold .$

The event to be detected may be an event triggered when a quality of at least one new beam is equal to or greater than a threshold value, and the triggering condition of the event may be determined according to an equation below:

$Quality of at least one new beam - hysteresis > threshold .$

The event to be detected may be an event triggered when a quality of a current beam is equal to or less than a first threshold value and a quality of at least one new beam is equal to or greater than a second threshold value, and the triggering condition of the event may be determined according to equations below:

$Quality of the current beam + hysteresis < threshold_ 1$

Quality of at least one new beam - hysteresis > threshold_2

The event to be detected may be an event triggered when a quality of a current beam is equal to or less than a first threshold value and a quality of at least one new beam is equal to or greater than a second threshold value, and the triggering condition of the event may be determined according to equations below:

$Quality of the current beam + hysteresis_ 1 < threshold_ 1$

Quality of at least one new beam - hysteresis_2 > threshold_2.

The at least one hysteresis value may be determined based on a speed of the terminal, whether the terminal is rotating, whether the terminal experiences blockage, and/or a location of the terminal.

A terminal, according to exemplary embodiments of the present disclosure for achieving the above-described objective, may comprise: at least one processor, wherein the at least one processor may cause the terminal to perform: determining a type of an event to be detected; determining a triggering condition of the event based on the determined type; and based on the event being detected according to the determined triggering condition, transmitting, to a base station, a beam report according to the event, wherein the triggering condition of the event includes at least one threshold value and at least one hysteresis value.

The at least one hysteresis value may be determined based on a speed of the terminal, whether the terminal is rotating, whether the terminal experiences blockage, and/or a location of the terminal.

The at least one processor may further cause the terminal to perform: receiving, from the base station, configuration information regarding triggering conditions for respective event types, wherein the triggering condition of the event may be determined based on the configuration information.

### [Advantageous Effects]

According to exemplary embodiments of the present disclosure, when a UE-initiated/event-driven beam reporting operation is performed, a triggering condition of an event can be changed based on the state of a terminal, the operation of the terminal, and/or the environment of the terminal. Accordingly, a situation in which a specific event is continuously or periodically detected within a short time period and a beam report is continuously or periodically transmitted can be prevented, and overall system performance can be improved.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9 is a sequence diagram illustrating a Mode A operation to which exemplary embodiments of the present disclosure are applied.
FIG. 10 is a sequence diagram illustrating a Mode B operation to which exemplary embodiments of the present disclosure are applied.
FIG. 11 is a sequence diagram illustrating a UE-initiated/event-driven beam reporting method according to exemplary embodiments of the present disclosure.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission and reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

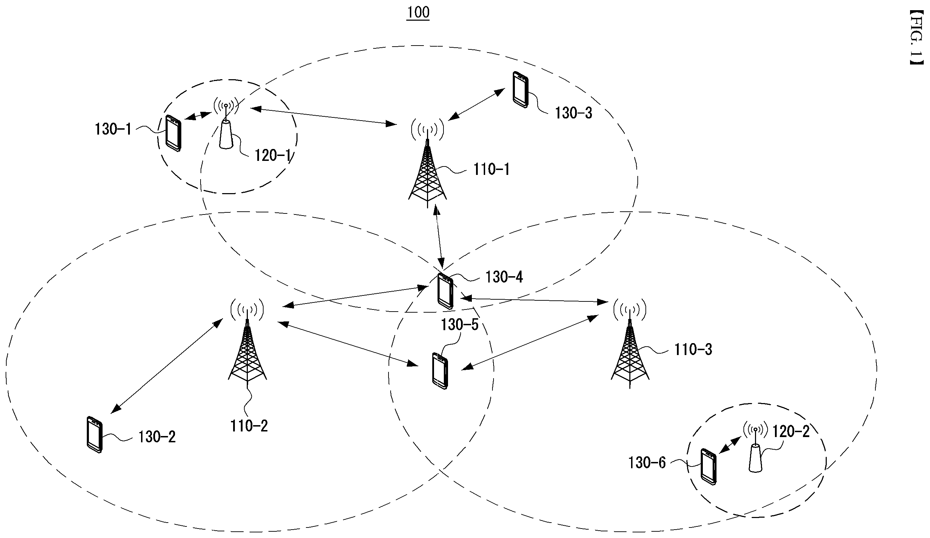

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

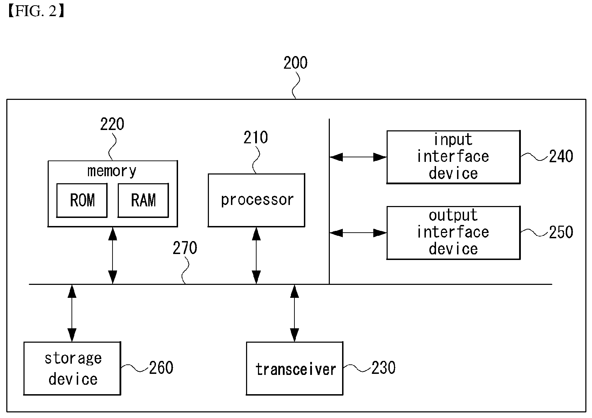

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multiuser MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

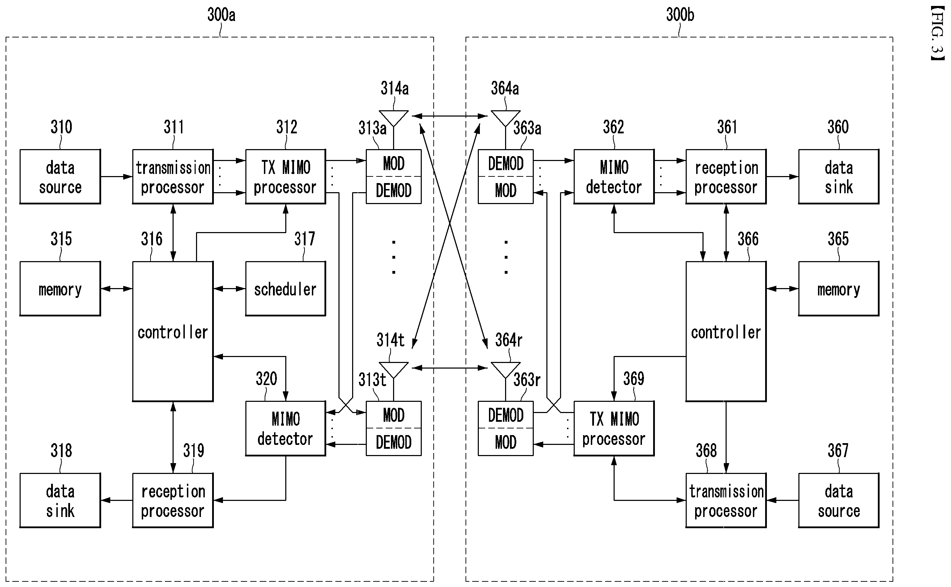

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

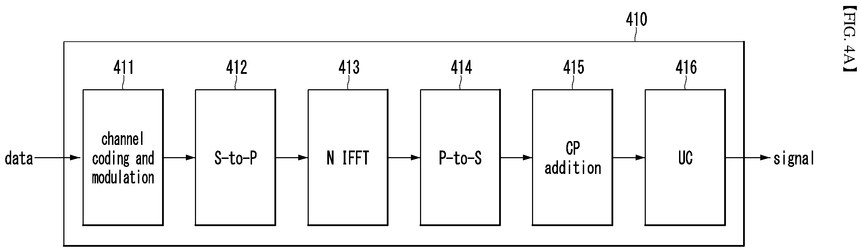

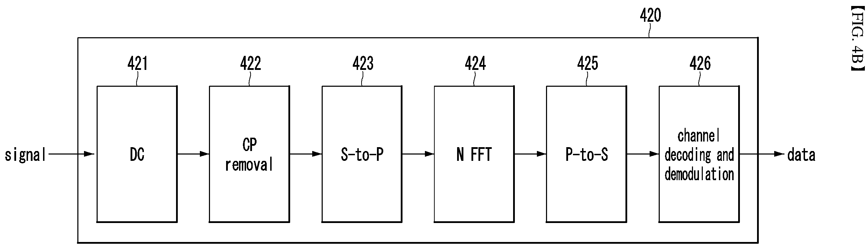

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g. parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

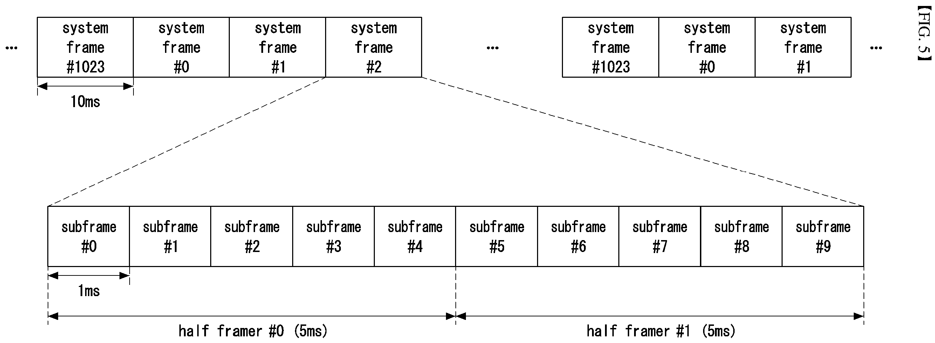

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

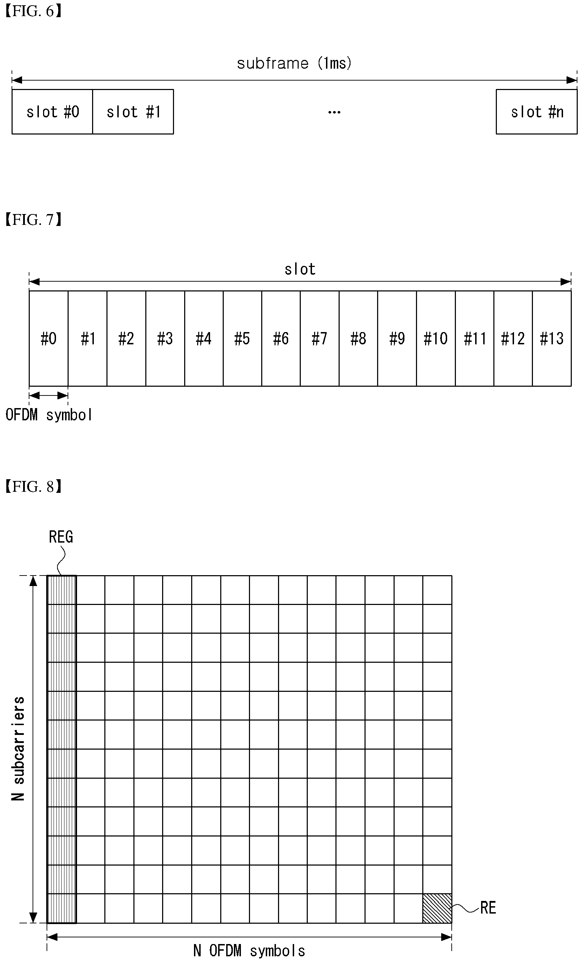

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 z | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. µ = 0), the length of slot may be 1 ms. In this case, one system frame may include 10 slots. When a subcarrier spacing is 30 kHz (e.g. µ = 1), the length of slot may be 0.5 ms. In this case, one system frame may include 20 slots.

When a subcarrier spacing is 60 kHz (e.g. µ = 2), the length of slot may be 0.25 ms. In this case, one system frame may include 40 slots. When a subcarrier spacing is 120 kHz (e.g. µ = 3), the length of slot may be 0.125 ms. In this case, one system frame may include 80 slots. When a subcarrier spacing is 240 kHz (e.g. µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Discussions on Rel-19 NR MIMO enhancements for intra-cell beam management and inter-cell beam management are being conducted based on a work item description (WID). Such improvements mainly target FR2 and single transmission/reception point (sTRP) scenarios, and aim to reduce overhead or latency while utilizing existing legacy CSI measurement and reporting configuration procedures.

To this end, UE-initiated (UEI)/event-driven (ED) beam management procedures are being discussed. Beam management methods defined up to Rel-18 are configured as network-initiated operations. That is, in a network-initiated beam management method, a network node (e.g. a base station) may instruct a terminal to switch to a specific beam for DL reception or UL transmission. In this case, because the base station provides an instruction based on a measurement report received from the terminal, the base station may not be able to identify an optimal beam until the measurement report is received from the terminal.

If a beam management operation is initiated by a terminal that can recognize a beam change first, latency (e.g. a time required for the base station to request a measurement report and receive the measurement report from the terminal) and signaling overhead (e.g. overhead of signaling for instructing the terminal to transmit the measurement report) may be reduced compared to the network-initiated beam management operation.

Meanwhile, in 3GPP RAN1 meetings (RAN #116 and RAN #116-bis), UEI/ED beam reporting procedures and general beam report transmission procedures were approved.

First, a beam report transmission procedure is largely classified into Mode A and Mode B, and an outline of a procedure according to each mode is as follows.

First, Mode A corresponds to a scheme in which uplink control information (UCI) for a beam report is dynamically scheduled by a base station, and may be performed through the following three-step operation.

Step 1: A terminal may transmit a first UL channel requesting resources for a second UL channel used to transmit a beam report. The first UL channel may be configured as a PUCCH (i.e. a first PUCCH) including 1-bit information or multi-bit information, and the PUCCH may follow an existing scheduling request (SR) type or a new UCI type.

Step 2: The terminal may detect a DCI format indicating resources of a second UL channel. In this case, a new DCI format is not introduced.

Step 3: The terminal may transmit a beam report on the second UL channel. In this case, the second UL channel may be a PUCCH, a PUSCH, or both.

Mode A is a baseline capability of a terminal, and all terminals supporting UEI/ED beam reporting are required to support this capability.

On the other hand, Mode B corresponds to a scheme in which UCI is transmitted in preconfigured resources for a second UL channel and may be performed through the following two-step operation.

Step 1: A terminal may transmit a first UL channel notifying that a beam report is to be transmitted on a second UL channel. The first UL channel may be configured as a PUCCH (i.e. a first PUCCH) including 1-bit information or multi-bit information, and the PUCCH may follow an existing SR type or a new UCI type.

Step 2: The terminal may transmit a beam report on the second UL channel. As in Mode A, the second UL channel may be a PUCCH, a PUSCH, or both.

In Mode B, the notification in Step 1 and the beam report in Step 2 are transmitted in separate report instances. In addition, whether a terminal receives acknowledgment information for each step in Mode A and Mode B has not been determined.

In addition, cross-component carrier (cross-CC) beam reporting may be supported in the above procedures for both Mode A and Mode B.

As described above, for a UEI/ED beam reporting operation, a procedure for delivering information from a terminal to a base station (Step 1) is first required in all modes. In Mode A in which resources for a beam report are not allocated in advance, the terminal may request resources for the beam report from the base station. In Mode B in which resources for a beam report are allocated in advance, the terminal may inform the base station that the terminal is to use the pre-allocated resources for the beam report.

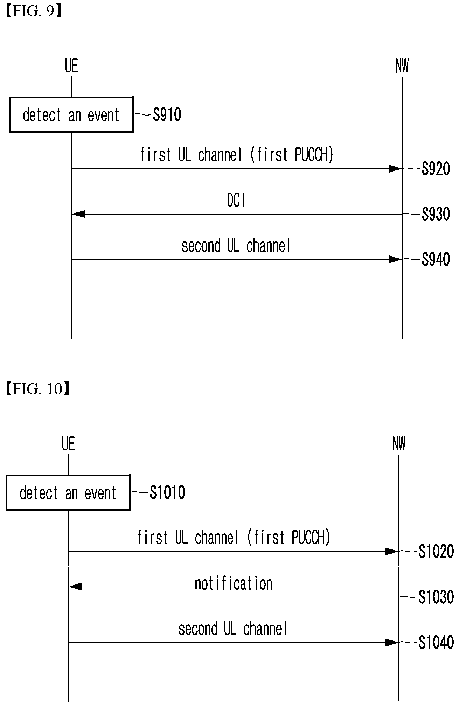

FIG. 9 is a sequence diagram illustrating a Mode A operation to which exemplary embodiments of the present disclosure are applied.

As shown in FIG. 9, a terminal may detect at least one event (S910). In this case, the terminal may detect at least one of the events described above (e.g. Event-1 to Event-9). When at least one event is detected, the terminal may request resources for a beam report through a first UL channel (i.e. a first PUCCH) (S920), and a base station that has received the first UL channel may indicate resources for a second UL channel to be used by the terminal for transmitting the beam report through DCI (S930). Thereafter, the terminal may transmit a second UL channel including the beam report using the resources (S940).

FIG. 10 is a sequence diagram illustrating a Mode B operation to which exemplary embodiments of the present disclosure are applied.

As shown in FIG. 10, a terminal may detect at least one event (S1010). In this case, the terminal may detect at least one of the events described above (e.g. Event-1 to Event-9). When at least one event is detected, the terminal may inform a base station, through a first UL channel (i.e. a first PUCCH), that the terminal is to transmit second UL channel(s) using preconfigured resources (S1020). Thereafter, the terminal may transmit second UL channel(s) including a beam report to the base station using the preconfigured resources (S1040).

In this case, the terminal may transmit the second UL channel(s) after receiving, from the base station, an acknowledgement (ACK) message indicating that the first PUCCH has been received (e.g. an ACK message composed of a 1-bit indicator or a notification message) (i.e. S1330 of FIG. 13). Alternatively, the terminal may transmit the second UL channel(s) in a slot or symbol after a predetermined offset from a time associated with transmission of the first PUCCH (e.g. a symbol or slot in which the first PUCCH is transmitted, such as the last symbol constituting the first PUCCH) without receiving an ACK message for the first PUCCH from the base station. For example, when it is not confirmed that reception of the first PUCCH by the base station has failed until the predetermined offset elapses from the time associated with transmission of the first PUCCH, the terminal may transmit the second UL channel(s) in a slot or symbol after the predetermined offset from the time associated with transmission of the first PUCCH. In this case, the offset may be configured by the base station for the terminal in units of symbols, sub-slots, slots, or subframes, or in the form or an absolute time, or may be predefined in technical specifications. Meanwhile, because a situation may occur in which the terminal fails to receive an ACK message transmitted by the base station, the base station may transmit the ACK message one or more times.

Meanwhile, the following events are being discussed as events that trigger the UEI/ED beam reporting described above.

Event-1: Quality (e.g. L1-RSRP) of the current beam is worse than a certain threshold.

Event-2: Quality of at least one new beam becomes a threshold value better than the current beam.

Event-3: Quality of a new beam is better than a certain threshold.

Event-4: Quality of the current beam is worse than a threshold 1, and quality of at least one new beam is better than a threshold 2.

Event-5: Absolute value of a difference between the quality of the current beam and the quality of at least one new beam is lower than a threshold.

Event-6: The current beam is not in the best K (>1) beams among beams configured for measurement and reporting.

Event-7a: Quality (e.g. L1-RSRP) of at least one new beam becomes a threshold value better than an RS derived from the activated TCI state with the worst quality.

Event-7b: Quality (e.g. L1-RSRP) of at least one new beam becomes a threshold value better than an RS derived from the activated TCI state with the best quality.

Event-8: Quality (e.g. L1-RSRP) of M (>1) new beams becomes a threshold value better than the current beam.

Event-9: Quality of at least one new beam (e.g., L1-RSRP) becomes a threshold value better than the configured reference RS (which may be SSB or CSI-RS).

For a UE-initiated beam reporting operation, conditions for triggering an event need to be defined more clearly. A specific event may be repeatedly detected within a short time period depending on a current state of a terminal or a channel environment between a base station and the terminal. In such a case, the terminal may frequently perform beam reporting whenever the event is detected, thereby increasing overhead. In addition, a situation may occur in which the terminal or the base station performs a beam change procedure more frequently than necessary.

Therefore, in order to prevent a situation in which beam reporting is continuously or periodically performed because an event is continuously or periodically detected within a short time period in a specific environment, application of specific parameter value(s) (e.g. a hysteresis value and/or an offset value) may be considered when defining an event triggering condition. Such parameter value(s) may be added to, removed from, or changed for an event triggering condition according to a specific condition (e.g. an event type).

Hereinafter, methods for improving event triggering conditions for the respective event types according to exemplary embodiments of the present disclosure are described.

### Event-1

Event-1 is an event that is triggered when quality (e.g. L1-RSRP) of the current beam becomes lower than a specific threshold. Specifically, Event-1 may be triggered when the condition of Equation 1 below is satisfied. In Equation 1, quality and/or the threshold of the current beam may be expressed as L1-RSRP, L1-RSRQ, and/or L1-SINR. $Quality of the current beam < threshold$

Meanwhile, the triggering condition of Event-1 according to an exemplary embodiment of the present disclosure may further include a hysteresis value as shown in Equation 2. $Quality of the current beam + hysteresis < threshold$

In Equation 2, the hysteresis value may be added, removed, or changed according to a specific condition. Here, the specific condition may be related to an operation associated with the terminal (e.g. the speed of the terminal, whether the terminal is rotating, or whether the terminal experiences blockage) or the surrounding environment of the terminal (e.g. whether the terminal is located at a specific geographical location).

For example, when the speed of the terminal is equal to or greater than a specific preset value, a hysteresis value may be added to Equation 2. Additionally or alternatively, the hysteresis value may be changed according to an absolute value (V) of the speed of the terminal. For example, when V_1 < V < V_2, a first hysteresis value (hys_1) may be used, and when V_2 < V < V_3, a second hysteresis value (hys_2) may be used. Here, parameters such as the first hysteresis value and the second hysteresis value may be delivered to the terminal through higher-layer signaling (e.g. in a table form). Alternatively, the parameters may be predefined in technical specifications.

Similarly, the hysteresis value may be adjusted according to whether the terminal is rotating. For example, when a direction of an antenna changes rapidly while the terminal rotates, variability of signal quality (e.g. QoS) may increase. Therefore, unnecessary handovers or measurement events may be reduced by applying a hysteresis value (or by applying a higher hysteresis value). Conversely, when the terminal does not significantly rotate or maintains a stable direction, a more sensitive triggering operation may be enabled by not applying a hysteresis value (or by applying a lower hysteresis value).

In addition, a hysteresis value may be adjusted according to whether the terminal experiences blockage. For example, when the terminal experiences signal blockage due to a building, a vehicle, or another obstacle, unnecessary handovers or link reconfigurations may occur due to temporary signal attenuation. To prevent such situations, temporary signal changes may be ignored by applying a hysteresis value (or by applying a higher hysteresis value) when blockage is detected. On the other hand, in an environment in which blockage continuously occurs (e.g. inside a tunnel or in a dense urban environment), a hysteresis value may be dynamically adjusted to enable a more appropriate handover or reconfiguration.

Meanwhile, the event triggering condition of Equation 2 may be modified as shown in Equation 3 below as a release condition of Event-1. $Quality of the current beam - hysteresis > threshold$

The conditions for addition, removal, or change of the hysteresis value described above with reference to Equation 2 may be similarly applied to the hysteresis value of Equation 3.

### Event-2

Event-2 may be triggered when the quality of at least one new beam is higher than the quality of the current beam by at least a specific threshold. Specifically, Event-2 may be triggered when the condition of Equation 4 below is satisfied. In Equation 4, quality values of the current beam and the new beam and the threshold may be expressed as L1-RSRP, L1-RSRQ, and/or L1-SINR. $Quality of at least one new beam > Quality of the current beam + threshold$

A triggering condition of Event-2 according to an exemplary embodiment of the present disclosure may further include a hysteresis value as shown in Equation 5. $Quality of at least one new beam - hysteresis > Quality of the current beam + threshold$

In Equation 5, the hysteresis value may be added, removed, or changed according to a specific condition. Here, the specific condition may be related to an operation associated with the terminal (e.g. the speed of the terminal, whether the terminal is rotating, or whether the terminal experiences blockage) or the surrounding environment of the terminal (e.g. whether the terminal is located at a specific geographical location).

For example, when the speed of the terminal is equal to or greater than a specific preset value, a hysteresis value may be added to Equation 5. Additionally or alternatively, the hysteresis value may be changed according to an absolute value (V) of the speed of the terminal. For example, when V_1 < V < V_2, a first hysteresis value (hys_1) may be used, and when V_2 < V < V_3, a second hysteresis value (hys_2) may be used. Here, parameters such as the first hysteresis value and the second hysteresis value may be delivered to the terminal through higher-layer signaling (e.g. in table form).

Similarly, the hysteresis value may be adjusted according to whether the terminal is rotating. For example, when a direction of an antenna changes rapidly while the terminal rotates, variability of signal quality (e.g. QoS) may increase. Therefore, unnecessary handovers or measurement events may be reduced by applying a hysteresis value (or by applying a higher hysteresis value). Conversely, when the terminal does not significantly rotate or maintains a stable direction, a more sensitive triggering operation may be enabled by not applying a hysteresis value (or by applying a lower hysteresis value).

In addition, a hysteresis value may be adjusted according to whether the terminal experiences blockage. For example, when the terminal experiences signal blockage due to a building, a vehicle, or another obstacle, unnecessary handovers or link reconfigurations may occur due to temporary signal attenuation. To prevent such occurrences, temporary signal changes may be ignored by applying a hysteresis value (or by applying a higher hysteresis value) when blockage is detected. On the other hand, in an environment in which blockage continuously occurs (e.g. inside a tunnel or in a dense urban environment), the hysteresis value may be dynamically adjusted to enable a more appropriate handover or reconfiguration.

In addition, in order to prevent beam reporting from occurring frequently and increasing overhead, the triggering condition of Event-2 may be changed to Equation 6 such that Event-2 is triggered when qualities of at least N new beams are higher than quality of the current beam by at least a specific threshold. In this case, a hysteresis value may not be applied. $Quality of N new beam \left(s\right) > Quality of the current beam + threshold$

Meanwhile, a release condition of Event-2 may be defined as shown in Equation 7 or Equation 8 below. $Quality of at least one new beam + hysteresis < Quality of the current beam + threhold$ $Qualities of N new beam \left(s\right) + hysteresis < Quality of the current beam + threshold$

The conditions for addition, removal, or change of the hysteresis value described above with reference to Equation 5 may be similarly applied to the hysteresis values of Equations 7 and 8.

In addition, the conditions for addition, removal, or change of the hysteresis value may be similarly applied not only when configuring the triggering condition of Event-2 but also when configuring the specific threshold value.

### Event-3

Event-3 may be triggered when quality of at least one new beam is equal to or greater than a specific threshold. Specifically, Event-3 may be triggered when the condition of Equation 9 below is satisfied. In Equation 9, the quality of the new beam and the threshold value may be expressed as L1-RSRP, L1-RSRQ, and/or L1-SINR. $Quality of at least one new beam > threshold$

A triggering condition of Event-3 according to an exemplary embodiment of the present disclosure may further include a hysteresis value as shown in Equation 10. $Quality of at least one new beam - hysteresis > threshold$

In Equation 10, the hysteresis value may be added, removed, or changed according to a specific condition. Here, the specific condition may be related to an operation associated with a terminal (e.g. the speed of the terminal, whether the terminal is rotating, or whether the terminal experiences blockage) or the surrounding environment of the terminal (e.g. whether the terminal is located at a specific geographical location).

For example, when the speed of the terminal is equal to or greater than a specific preset value, a hysteresis value may be added to Equation 10. Additionally or alternatively, the hysteresis value may be changed according to an absolute value (V) of the speed of the terminal. For example, when V_1 < V < V_2, a first hysteresis value (hys_1) may be used, and when V_2 < V < V_3, a second hysteresis value (hys_2) may be used. Here, parameters such as the first hysteresis value and the second hysteresis value may be delivered to the terminal through higher-layer signaling (e.g. in table form).

Similarly, the hysteresis value may be adjusted according to whether the terminal is rotating. For example, when a direction of an antenna changes rapidly while the terminal rotates, variability of signal quality (e.g. QoS) may increase. Therefore, unnecessary handovers or measurement events may be reduced by applying a hysteresis value (or by applying a higher hysteresis value). Conversely, when the terminal does not significantly rotate or maintains a stable direction, a more sensitive triggering operation may be enabled by not applying a hysteresis value (or by applying a lower hysteresis value).

In addition, the hysteresis value may be adjusted according to whether the terminal experiences blockage. For example, when the terminal experiences signal blockage due to a building, a vehicle, or another obstacle, unnecessary handovers or link reconfigurations may occur due to temporary signal attenuation. To prevent such occurrences, temporary signal changes may be ignored by applying a hysteresis value (or by applying a higher hysteresis value) when blockage is detected. On the other hand, in an environment in which blockage continuously occurs (e.g., inside a tunnel or in a dense urban environment), the hysteresis value may be dynamically adjusted to enable a more appropriate handover or reconfiguration.

In addition, in order to prevent beam reporting from occurring frequently and increasing overhead, the triggering condition of Event-3 may be changed to Equation 11 such that Event-3 is triggered when qualities of at least N new beams are equal to or greater than a specific threshold value. In this case, a hysteresis value may not be applied. $Qualities of N new beam \left(s\right) > threshold$

Meanwhile, a release condition of Event-3 may be defined as shown in Equation 12 or Equation 13 below. $Quality of at least one new beam + hysteresis < threshold$ $Qualities of N new beam \left(s\right) + hysteresis < threshold$

The conditions for addition, removal, or change of the hysteresis value described above with reference to Equation 10 may be similarly applied to the hysteresis values of Equation 12 and Equation 13.

In addition, the conditions for addition, removal, or change of the hysteresis value may be similarly applied not only when configuring the triggering condition of Event-3 but also when configuring a specific threshold value.

### Event-4

Event-4 may be triggered when quality of the current beam is equal to or less than a specific threshold (threshold_1) and, simultaneously, quality of at least one new beam is equal to or greater than a specific threshold (threshold_2). Specifically, Event-4 may be triggered when all conditions of Equation 14 below are satisfied. In Equation 14, the quality values of the current beam and the new beam and the threshold values may be expressed as L1-RSRP, L1-RSRQ, and/or L1-SINR. $Quality of the current beam < threshold _ 1$

Quality of at least one new beam > threshold_2

The triggering condition of Event-4 according to an exemplary embodiment of the present disclosure may further include a hysteresis value as shown in Equation 15. $Quality of the current beam + hysteresis < threshold _ 1$

Quality of at least one new beam - hysteresis > threshold_2

In Equation 15, the hysteresis value may be added, removed, or changed according to a specific condition. Here, the specific condition may be related to an operation associated with a terminal (e.g. the speed of the terminal, whether the terminal is rotating, or whether the terminal experiences blockage) or the surrounding environment of the terminal (e.g. whether the terminal is located at a specific geographical location).

For example, when the speed of the terminal is equal to or greater than a specific preset value, a hysteresis value may be added to Equation 16 and Equation 17. Additionally or alternatively, the hysteresis value may be changed according to an absolute value (V) of the speed of the terminal. For example, when V_1 < V < V_2, a first hysteresis value (hys_1) may be used, and when V_2 < V < V_3, a second hysteresis value (hys_2) may be used. Here, parameters such as the first hysteresis value and the second hysteresis value may be delivered to the terminal through higher-layer signaling (e.g. in table form).

Similarly, the hysteresis value may be adjusted according to whether the terminal is rotating. For example, when a direction of an antenna changes rapidly while the terminal rotates, variability of signal quality (e.g. QoS) may increase. Accordingly, unnecessary handovers or measurement events may be reduced by applying a hysteresis value (or by applying a higher hysteresis value). Conversely, when the terminal does not significantly rotate or maintains a stable direction, a more sensitive triggering operation may be enabled by not applying a hysteresis value (or by applying a lower hysteresis value).

In addition, the hysteresis value may be adjusted according to whether the terminal experiences blockage. For example, when the terminal experiences signal blockage due to a building, a vehicle, or another obstacle, unnecessary handovers or link reconfigurations may occur due to temporary signal attenuation. To prevent such situations, temporary signal changes may be ignored by applying a hysteresis value (or by applying a higher hysteresis value) when blockage is detected. On the other hand, in an environment in which blockage continuously occurs (e.g. inside a tunnel or in a dense urban environment), the hysteresis value may be dynamically adjusted to enable a more appropriate handover or reconfiguration.

In addition, a hysteresis value may be applied only to the quality of the current beam or only to the quality of the new beam according to a specific condition, and different hysteresis values may be applied to the current beam and the new beam. In such a case, the triggering condition of Event-4 may be changed as shown in Equation 16. $Quality of the current beam + hysteresis _ 1 < threshold _ 1$

Quality of at least one new beam - hysteresis_2 > threshold_2

In addition, in order to prevent beam reporting from occurring frequently and increasing overhead, the triggering condition of Event-4 may be changed to Equation 17 such that Event-4 is triggered when qualities of at least N new beams are higher than quality of the current beam by at least a specific threshold. In this case, a hysteresis value may not be applied. $Quality of the current beam + hysteresis _ 1 < threshold _ 1$

Qualities of N new beam(s) - hysteresis_2 > threshold_2

Meanwhile, a release condition of Event-4 may be defined as shown in Equation 18 or Equation 19 below. $Quality of the current beam - hysteresis > threshold _ 1$

Quality of at least one new beam + hysteresis < threshold_2 $Quality of the current beam - hysteresis > threshold _ 1$

Qualities of N new beam(s) + hysteresis < threshold_2

The conditions for addition, removal, or change of the hysteresis value described above with reference to Equation 15 may be similarly applied to the hysteresis values of Equation 18 and Equation 19.

In addition, when determining a specific threshold, the threshold_1 value (or the threshold_2 value) may be used as a reference. For example, the threshold_2 value may be determined based on the threshold_1 value, which may be expressed as shown in Equation 20. $threshold _ 2 = threshold _ 1 + offset$

Alternatively, the threshold_1 value may be determined based on the threshold_2 value, which may be expressed as shown in Equation 21. $threshold_ 1 = threshold_ 2 - offset$

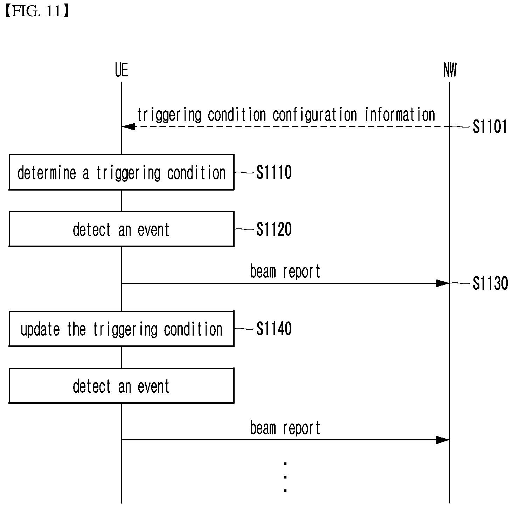

FIG. 11 is a sequence diagram illustrating a UE-initiated/event-driven beam reporting method according to exemplary embodiments of the present disclosure.

As shown in FIG. 11, a terminal (UE) may receive triggering condition configuration information from a base station (NW) (S1101). The triggering condition configuration information may include information regarding event triggering conditions for respective event types. For example, the triggering condition configuration information may include information regarding triggering conditions for the above-described Event-1, Event-2, Event-3, and/or Event-4 and other event types. For example, the triggering condition configuration information may include information indicating whether hysteresis value(s) are applied to triggering conditions of respective event types, the hysteresis value(s), whether threshold value(s) are applied to triggering conditions of respective event types, and the threshold value(s). Additionally or alternatively, the triggering condition configuration information may include information regarding whether hysteresis value(s) and/or threshold value(s) included in triggering conditions of respective event types are applied according to a state or operation of the terminal (e.g. the speed of the terminal, whether the terminal is rotating, and whether the terminal experiences blockage) and/or the environment of the terminal (e.g. a location of the terminal). Additionally or alternatively, the triggering condition configuration information may include information regarding changes of the hysteresis value(s) and/or threshold value(s) according to a state or operation of the terminal and/or an environment of the terminal. Meanwhile, receiving the triggering condition configuration information (S1101) may be optional. That is, information included in the triggering condition configuration information may be predefined in technical specifications or may be preconfigured in the terminal.

The terminal may determine a triggering condition of a corresponding event based on the type of event to be detected (S1110). In this case, the triggering condition of the corresponding event may be determined based on the triggering condition configuration information and/or the state or operation of the terminal and/or the environment of the terminal. Alternatively, when the triggering condition configuration information is not received, the triggering condition of the corresponding event may be determined based on information predefined in technical specifications or information preconfigured in the terminal.

The terminal may detect an event according to the determined event triggering condition (S1120), and information regarding the detected event and a measurement result associated with the event may be delivered to the base station through a beam report (S1130). The beam report may be performed through the Mode A operation or the Mode B operation described with reference to FIG. 9 and FIG. 10.

Meanwhile, after the terminal transmits the beam report, the terminal may update the event triggering condition based on an updated state or operation of the terminal and/or an updated environment of the terminal (S1140). That is, the triggering condition of the event may be dynamically updated based on a current state, operation, and environment of the terminal. Subsequent event detection and beam reporting operations may be performed according to the updated event triggering condition.

In the above exemplary embodiments, application of parameter values (e.g. hysteresis values and/or threshold values) or magnitudes of the parameter values may vary according to the event type. Accordingly, it may be necessary to identify an event when the event occurs. To this end, the terminal may explicitly or implicitly deliver event identification information such as an event ID to the base station.

In the above exemplary embodiments, parameter values (e.g. hysteresis values and/or threshold values) may be (pre)configured, and application (or non-application) of the parameter values may be a default operation. On the other hand, whether the parameter values are applied may be signaled by the base station (or the terminal) to the terminal (or the base station). In this case, RRC signaling, MAC CE signaling, and/or PHY layer signaling may be used.

In the above exemplary embodiments, parameter values (e.g. hysteresis values and/or threshold values), event identification information, and/or whether the parameter values are applied may be determined depending on an operation associated with the terminal (e.g. the speed of the terminal, whether the terminal is rotating, and/or whether the terminal experiences blockage) or the surrounding environment (e.g. a specific geographical location of the terminal).

In the above exemplary embodiments, that a UE-initiated beam management operation (or a beam reporting operation) is performed may be broadly interpreted as meaning that the terminal transmits signaling indicating that the UE-initiated beam management operation (or the beam reporting operation) is performed to the base station.

In the above exemplary embodiments, that a UE-initiated beam management operation (or a beam reporting operation) is stopped or suspended may be broadly interpreted as meaning that the terminal (or the base station) transmits signaling indicating that the UE-initiated beam management operation (or the beam reporting operation) is stopped or suspended to the base station (or the terminal). Alternatively, that a UE-initiated beam management operation (or a beam reporting operation) is stopped or suspended may be narrowly interpreted as meaning that a legacy base-station-initiated beam management operation is performed without performing the UE-initiated beam management operation (or the beam reporting operation).

In the above exemplary embodiments, when a beam reporting operation is performed through the defined events, a beam report may be transmitted only a specific number of times (with a specific periodicity) or may be continuously transmitted (with a specific periodicity).

The methods proposed through the above exemplary embodiments may be identically or similarly applied to event(s) additionally defined beyond the defined events. The methods proposed through the above exemplary embodiments may be applied to intra-cell and/or inter-cell beam management. The methods proposed through the above exemplary embodiments may also be identically or similarly applied to multi-TRP (mTRP) operations.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal for an event-driven beam reporting operation, the method comprising:
determining a type of an event to be detected;
determining a triggering condition of the event based on the determined type; and
based on the event being detected according to the determined triggering condition, transmitting, to a base station, a beam report according to the event,
wherein the triggering condition of the event includes at least one threshold value and at least one hysteresis value.

2. The method of claim 1, wherein the event to be detected is an event triggered when a quality of a current beam becomes lower than a threshold value, and the triggering condition of the event is determined according to an equation below: $Quality of the current beam + hysteresis < threshold .$

3. The method of claim 1, wherein the event to be detected is an event triggered when a quality of at least one new beam becomes higher than a quality of a current beam by at least a threshold value, and the triggering condition of the event is determined according to an equation below: $Quality of at least one new beam - hysteresis > Quality of the current beam + threshold .$

4. The method of claim 1, wherein the event to be detected is an event triggered when a quality of at least one new beam is equal to or greater than a threshold value, and the triggering condition of the event is determined according to an equation below: $Quality of at least one new beam - hysteresis > threshold .$

5. The method of claim 1, wherein the event to be detected is an event triggered when a quality of a current beam is equal to or less than a first threshold value and a quality of at least one new beam is equal to or greater than a second threshold value, and the triggering condition of the event is determined according to equations below: $\begin{matrix}Quality of the current beam + hysteresis < threshold_ 1 \\ Quality of at least one new beam - hysteresis > threshold_ 2\end{matrix}$

6. The method of claim 1, wherein the event to be detected is an event triggered when a quality of a current beam is equal to or less than a first threshold value and a quality of at least one new beam is equal to or greater than a second threshold value, and the triggering condition of the event is determined according to equations below: $\begin{matrix}Quality of the current beam + hysteresis_ 1 < threshold_ 1 \\ Quality of at least one new beam - hysteresis_ 2 > threshold_ 2 .\end{matrix}$

7. The method of claim 1, wherein the at least one hysteresis value is determined based on a speed of the terminal, whether the terminal is rotating, whether the terminal experiences blockage, and/or a location of the terminal.

8. The method of claim 1, further comprising: receiving, from the base station, configuration information regarding triggering conditions for respective event types,
wherein the triggering condition of the event is determined based on the configuration information.

9. A method of a base station for an event-driven beam reporting operation of a terminal, the method comprising:
transmitting, to the terminal, configuration information regarding triggering conditions for respective event types; and
receiving, from the terminal, a beam report according to an event detected based on a triggering condition of the event to be detected, the triggering condition being determined based on the configuration information,
wherein the triggering condition of the event includes at least one threshold value and at least one hysteresis value.

10. The method of claim 9, wherein the event to be detected is an event triggered when a quality of a current beam becomes lower than a threshold value, and the triggering condition of the event is determined according to an equation below: $Quality of the current beam + hysteresis < threshold .$

11. The method of claim 9, wherein the event to be detected is an event triggered when a quality of at least one new beam becomes higher than a quality of a current beam by at least a threshold value, and the triggering condition of the event is determined according to an equation below: $Quality of at least one new beam - hysteresis > Quality of the current beam + threshold$

12. The method of claim 9, wherein the event to be detected is an event triggered when a quality of at least one new beam is equal to or greater than a threshold value, and the triggering condition of the event is determined according to an equation below: $Quality of at least one new beam - hysteresis > threshold .$

13. The method of claim 9, wherein the event to be detected is an event triggered when a quality of a current beam is equal to or less than a first threshold value and a quality of at least one new beam is equal to or greater than a second threshold value, and the triggering condition of the event is determined according to equations below: $\begin{matrix}Quality of the current beam + hysteresis < theshold_ 1 \\ Quality of at least one new beam - hysteresis > threshold_ 2 .\end{matrix}$

14. The method of claim 9, wherein the event to be detected is an event triggered when a quality of a current beam is equal to or less than a first threshold value and a quality of at least one new beam is equal to or greater than a second threshold value, and the triggering condition of the event is determined according to equations below: $\begin{matrix}Quality of the current beam + hysteresis_ 1 < threshold_ 1 \\ Quality of at least one new beam - hysteresis_ 2 > threshold_ 2 .\end{matrix}$

15. The method of claim 9, wherein the at least one hysteresis value is determined based on a speed of the terminal, whether the terminal is rotating, whether the terminal experiences blockage, and/or a location of the terminal.

16. A terminal for an event-driven beam reporting operation, comprising at least one processor, wherein the at least one processor causes the terminal to perform:
determining a type of an event to be detected;
determining a triggering condition of the event based on the determined type; and
based on the event being detected according to the determined triggering condition, transmitting, to a base station, a beam report according to the event,
wherein the triggering condition of the event includes at least one threshold value and at least one hysteresis value.

17. The terminal of claim 16, wherein the at least one hysteresis value is determined based on a speed of the terminal, whether the terminal is rotating, whether the terminal experiences blockage, and/or a location of the terminal.

18. The terminal of claim 16, wherein the at least one processor further causes the terminal to perform: receiving, from the base station, configuration information regarding triggering conditions for respective event types,
wherein the triggering condition of the event is determined based on the configuration information.
